# DEMANDE DE BREVET EUROPEEN

(11) **EP 4 197 772 A1**
(43) Date de publication de la demande: **21.06.2023**
(21) Numéro de dépôt: 22211506.5
(22) Date de dépôt: 05.12.2022
(51) Int. Cl.: B29D 99/00

(54) **DISPOSITIF DE FABRICATION D'UN PANNEAU RAIDI PERMETTANT DE MAÎTRISER LA GÉOMÉTRIE DUDIT PANNEAU RAIDI ET PROCÉDÉ DE FABRICATION D'UN PANNEAU RAIDI UTILISANT LEDIT DISPOSITIF**

(30) Priorité: 14.12.2021 FR 2113420
(71) Demandeur: AIRBUS OPERATIONS (S.A.S.), 31060 Toulouse (FR)
(72) Inventeur: PRIDIE, Jago, 31060 TOULOUSE (FR)
(74) Mandataire: Airbus-OPS SAS

(57) **Abrégé**

La demande a pour objet un dispositif de fabrication d'un panneau raidi pourvu de renforts qui présentent chacun une épaisseur finale ainsi qu'une hauteur finale. Ce dispositif de fabrication comprend plusieurs outillages (56) configurés pour supporter chacun une préforme de fibres (46) ayant une section transversale en U ou en C avec une base (48) et deux ailes (50.1, 50.2). Chaque outillage (56) comprend, au niveau d'au moins une de ses première et deuxième faces latérales (60, 62), un décrochement (62) délimitant, lorsque deux outillages (56) sont juxtaposés, un logement (68) configuré pour former un renfort lors d'une étape de consolidation ou de polymérisation. Les outillages (56) sont dimensionnés de manière à ce que chaque logement (68) présente une largeur à la température de consolidation ou de polymérisation sensiblement égale à l'épaisseur des renforts. Cette solution permet de mieux maîtriser la géométrie du panneau raidi en évitant la formation de bourrelets.

La demande a également pour objet un procédé de fabrication d'un panneau raidi utilisant ledit dispositif.

## Description

La présente demande se rapporte à un dispositif de fabrication d'un panneau raidi permettant de maîtriser la géométrie dudit panneau raidi ainsi qu'à un procédé de fabrication d'un panneau raidi utilisant ledit dispositif.

Selon un mode de réalisation, un panneau raidi 10 comprend un panneau 12, sous la forme d'une plaque, ainsi que des renforts 14, rapportés sur une face du panneau 12, parallèles entre eux et sensiblement perpendiculaires au panneau 12.

Selon un mode de réalisation décrit dans le document FR2942165 et visible sur les figures 2 et 3, les renforts sont obtenus à partir de préformes de fibres 16 ayant chacune une section transversale en U, avec une base 18 et deux ailes 20.1, 20.2. Selon un procédé de fabrication dit IML (pour Inner Mould Line en anglais), chaque préforme de fibres 16 est positionnée sur un outillage 22 puis les différents outillages 22 sont agencés sur un support 24, les bases 18 des différentes préformes de fibres 16 étant orientées vers le haut, les ailes 20.1, 20.2 de deux préformes de fibres 16 adjacentes étant plaquées l'une contre l'autre. En suivant, au moins une couche de fibres 26 est rapportée sur les bases 18 des préformes de fibres 16. Les préformes de fibres 16 et la couche de fibres 26 sont alors consolidées simultanément ou co-cuites, avec un apport de résine si les fibres des préformes de fibres 16 et de la couche de fibres 26 sont sèches. A l'issue de cette étape de consolidation ou de polymérisation, on obtient un panneau raidi 10, la couche de fibres 26 et les bases 18 des préformes de fibres 16 formant le panneau 12 du panneau raidi 10, les ailes 20.1, 20.2 des préformes de fibres 16 formant les renforts 14 du panneau raidi 10.

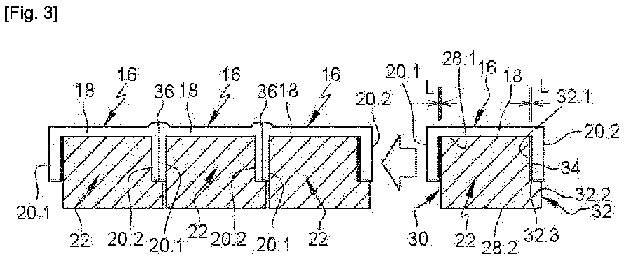

Selon une configuration visible sur la figure 3, chaque outillage 22 comprend une face supérieure 28.1 sur laquelle la base 18 d'une préforme de fibres 16 est posée, une face inférieure 28.2 sensiblement parallèle à la face supérieure 28.1 et configurée pour être posée sur le support 24 ainsi que des première et deuxième faces latérales 30, 32 reliant les faces supérieure et inférieure 28.1, 28.2. Au moins l'une des faces latérales 30, 32 comprend un premier pan 32.1 plat, adjacent et sensiblement perpendiculaire à la face supérieure 28.1, un deuxième pan 32.2 plat, adjacent et sensiblement perpendiculaire à la face inférieure 28.2 ainsi qu'un décrochement 32.3 reliant les premier et deuxième pans 32.1, 32.2 et sensiblement parallèle à la face supérieure 28.1. Ainsi, lorsque deux outillages 22 sont juxtaposés, ils délimitent un logement 34 pour les ailes 20.1, 20.2 des préformes de fibres 16 positionnées sur les deux outillages 22.

Contrairement aux préformes de fibres 16 qui ne sont pas trop impactées par les phénomènes de dilatation, les outillages 22 présentent des dimensions qui varient en fonction de la température. Comme illustré sur la figure 3, pour tenir compte de ces différences de variations dimensionnelles, chaque préforme de fibres 16 présente, à la température ambiante, une surlongueur L par rapport à l'outillage 22 qui la reçoit afin que les première et deuxième faces 28.1, 28.2 de l'outillage 22 soient en contact avec les ailes 20.1, 20.2 de la préforme de fibres 16 à la température de consolidation ou de polymérisation, de l'ordre de 180°C.

Afin de tenir compte de la variation dimensionnelle des outillages 22, les outillages 22 sont positionnés sur le support 24 légèrement espacés à la température ambiante de manière à ce qu'ils soient en contact les uns avec les autres à la température de consolidation ou de polymérisation.

Lors de la mise en place des préformes de fibres 16 sur leurs outillages 22, les surlongueurs peuvent générer des bourrelets 36.

Lors de l'étape de consolidation ou de polymérisation, les ailes 20.1, 20.2 sont compactées dans les logements 34 en raison de l'expansion des outillages 22. Pour chaque renfort 14, les extrémités des ailes 20.1, 20.2 étant en contact avec le décrochement 32.3, ce compactage accentue un bourrelet 36 déjà présent ou provoque la formation d'un bourrelet 36 au niveau de la face des préformes de fibres 16 sur laquelle doit être déposée la couche de fibres 26. L'ajout de cette couche de fibres 26 accentue la forme saillie des bourrelets 36.

La présence de ces bourrelets 36 s'avère problématique lors de la pose de la couche de fibres 26 car les têtes de pose peuvent rentrer en collision avec les bourrelets 36.

L'utilisation d'une contreplaque 38 (appelée caul plate en anglais) lors de l'étape de consolidation ou de polymérisation ne permet pas d'aplanir ces bourrelets 36 si bien que la pièce finale présente des bourrelets, ce qui peut ne pas être satisfaisant pour certaines pièces à réaliser.

La présente invention vise à remédier à tout ou partie des inconvénients de l'art antérieur.

A cet effet, l'invention a pour objet un dispositif de fabrication d'un panneau raidi comprenant un panneau et des renforts qui présentent chacun une épaisseur finale ainsi qu'une hauteur finale. Ce dispositif de fabrication comprend au moins un support présentant une surface d'appui ainsi que des outillages configurés pour supporter chacun une préforme de fibres ayant une section transversale en U ou en C avec une base et deux ailes, chaque outillage comportant une première face configurée pour recevoir la base d'une préforme de fibres, une deuxième face configurée pour être positionnée contre la surface d'appui du support ainsi que des première et deuxième faces latérales reliant les première et deuxième d'une préforme de fibres ; au moins l'une des première et deuxième faces latérales comportant un décrochement délimitant, lorsque deux outillages sont juxtaposés, un logement débouchant au niveau des premières faces et configuré pour former un renfort lors d'une étape de consolidation ou de polymérisation. En fonctionnement, chaque outillage est soumis à une première température puis à une deuxième température de consolidation ou de polymérisation supérieure à la première température lors d'une étape de consolidation ou de polymérisation.

Selon l'invention, les outillages sont dimensionnés de manière à ce que chaque logement présente une largeur, à la deuxième température de consolidation ou de polymérisation, sensiblement égale à l'épaisseur du renfort à former dans ledit logement.

Cette solution permet de mieux maîtriser la géométrie du panneau raidi en évitant la formation de bourrelets

Selon une autre caractéristique, chaque outillage comprend, au niveau de chaque décrochement, un revêtement expansible en fonction de la température.

Selon une autre caractéristique, chaque outillage comprend une première dimension prise dans un plan transversal séparant la première face et le décrochement, ladite première dimension présentant une première valeur à la première température et une deuxième valeur à la deuxième température de consolidation ou de polymérisation. En complément, le revêtement expansible et la première dimension de l'outillage sont déterminés de manière à ce que des ailes de préformes de fibres positionnées au droit du décrochement soient en contact avec le revêtement expansible à la deuxième température de consolidation ou de polymérisation lors d'une étape de consolidation ou de polymérisation.

Selon une autre caractéristique le revêtement expansible est configuré pour ne plus s'expanser lorsqu'il est en contact avec les ailes lors d'une étape de consolidation ou de polymérisation.

Selon une autre caractéristique, le revêtement expansible est non réversible.

Selon une autre caractéristique, le revêtement expansible comprend une couche de colle repositionnable pour le relier à l'outillage.

Selon une autre caractéristique, chaque outillage comprend, au niveau du décrochement, une deuxième dimension prise dans un plan transversal et correspondant à la largeur du décrochement, ladite deuxième dimension présentant une troisième valeur à la première température et une quatrième valeur à la deuxième température de consolidation ou de polymérisation. En complément, la troisième valeur de la deuxième dimension est supérieure à l'épaisseur finale du renfort à former au droit dudit décrochement.

Selon une autre caractéristique, la deuxième dimension est déterminée de manière à ce que la quatrième valeur soit sensiblement égale à l'épaisseur finale du renfort à former au droit dudit décrochement.

L'invention a également pour objet un procédé de fabrication d'un panneau raidi, caractérisé en ce que le procédé de fabrication comprend :
- une étape de mise en place des préformes de fibres sur des outillages pourvus chacun d'un revêtement expansible au niveau de chaque décrochement,
- une étape de positionnement des outillages pourvus des préformes de fibres sur le support,
- une étape de pose d'une couche de fibres sur les bases des préformes de fibres,
- une étape de mise en place d'un habillage de consolidation ou de polymérisation sur la couche de fibres,
- une étape de consolidation ou de polymérisation,
- une étape de démoulage,
- une étape d'apposition de nouveaux revêtements expansibles non expansés sur chacun des décrochements.

D'autres caractéristiques et avantages ressortiront de la description de l'invention qui va suivre, description donnée à titre d'exemple uniquement, en regard des dessins annexés parmi lesquels :

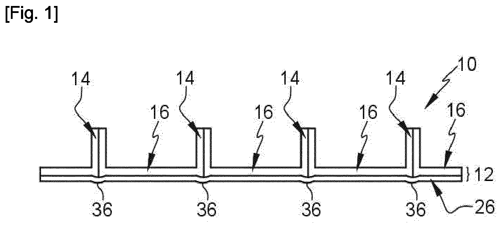

- La figure 1 est une coupe transversale schématique d'un panneau raidi illustrant un mode de réalisation de l'art antérieur,

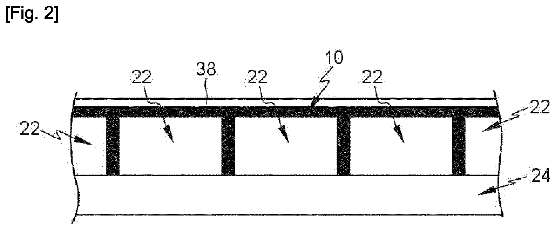

- La figure 2 est une coupe transversale schématique d'un dispositif de fabrication d'un panneau raidi illustrant un mode de réalisation de l'art antérieur,
- La figure 3 est une coupe transversale schématique d'outillages d'un dispositif de fabrication d'un panneau raidi illustrant un mode de réalisation de l'art antérieur,
- La figure 4 est une coupe transversale schématique d'outillages d'un dispositif de fabrication d'un panneau raidi illustrant un mode de réalisation de l'invention,
- La figure 5 est une coupe transversale schématique des outillages visibles sur la figure 4 sur lesquels sont positionnées des préformes de fibres,
- La figure 6 est une coupe transversale schématique d'un dispositif de fabrication d'un panneau raidi illustrant un mode de réalisation de l'invention,
- La figure 7 est une coupe transversale schématique des outillages visibles sur la figure 4 sur lesquels est positionné un panneau raidi après une étape de consolidation ou de polymérisation,
- La figure 8 est une vue en perspective d'un panneau raidi illustrant un mode de réalisation de l'invention.

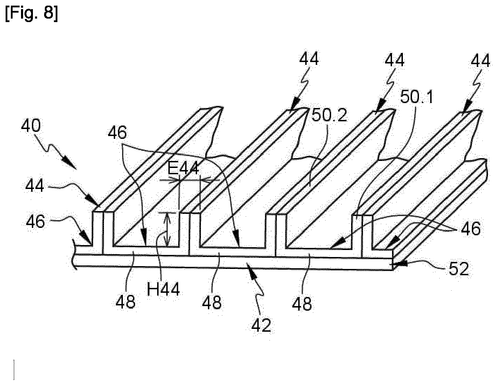

Selon un mode de réalisation visible sur la figure 8, un panneau raidi 40 comprend un panneau 42, sous la forme d'une plaque, ainsi que des renforts 44, rapportés sur une face du panneau 42, parallèles entre eux et sensiblement perpendiculaires au panneau 42. Les renforts 44 sont orientés selon une direction dite longitudinale. Un plan transversal correspond à un plan perpendiculaire à la direction longitudinale.

Chaque renfort 44 présente une épaisseurfinale E44 (dimension prise dans un plan transversal selon une direction parallèle au panneau 42) et une hauteur finale H44 (dimension prise dans un plan transversal selon une direction perpendiculaire au panneau 42).

Sur la figure 8, le panneau 42 est plat. Bien entendu, l'invention n'est pas limitée à cette géométrie. Ainsi, le panneau 42 peut présenter au moins un rayon de courbure dans un plan transversal.

Selon une application donnée à titre indicatif, un caisson central de voilure d'un aéronef comprend au moins un panneau raidi obtenu selon l'invention.

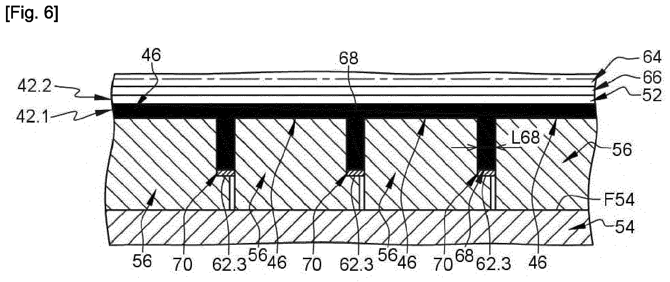

Selon un mode de réalisation visible sur la figure 6, un panneau raidi 40 est obtenu à partir de plusieurs préformes de fibres 46 ayant chacune une section transversale en U ou en C, avec une base 48 et deux ailes 50.1, 50.2, les préformes de fibres 46 étant accolées les unes aux autres de manière à ce que les bases 48 forment au moins une première partie 42.1 du panneau 42 et que les ailes 50.1, 50.2 de deux préformes de fibres 46 adjacentes soient plaquées l'une contre l'autre et forment un renfort 44. En complément, le panneau raidi est obtenu à partir d'au moins une couche de fibres 52, sous forme de plis, de mèches et/ou de profilés, rapportée sur les bases 48 des préformes de fibres 46 pour former une deuxième partie 42.2 du panneau 42.

Selon un mode de réalisation, un procédé de fabrication d'une préforme de fibres 46 comprend une première étape de drapage à plat de plis de fibres puis une étape de mise en forme selon une section transversale souhaitée pour la préforme de fibres 46.

Les fibres des préformes de fibres 46 et de la couche de fibres 52 peuvent être sèches ou pré-imprégnées. En suivant, les préformes de fibres 46 et la couche de fibres 52 sont consolidées simultanément ou co-cuites, avec un apport de résine si les fibres sont sèches. A l'issue de cette étape de consolidation ou de polymérisation, on obtient un panneau raidi 40, les fibres des bases 48 des préformes de fibres 46 et de la couche de fibres 52 formant le panneau 42 du panneau raidi 40, les ailes 50.1, 50.2 des préformes de fibres 46 formant les renforts 44 du panneau raidi 40. Ce mode opératoire permet d'obtenir une continuité des fibres entre les renforts 44 et le panneau 42, ce qui confère au panneau raidi 40 des caractéristiques mécaniques élevées.

Selon un mode de réalisation visible sur la figure 6, un dispositif de fabrication d'un panneau raidi comprend au moins un support 54 présentant une surface d'appui F54 ainsi que des outillages 56 rapportés contre la surface d'appui F54 du support 54 et configurés chacun pour supporter une préforme de fibres 46.

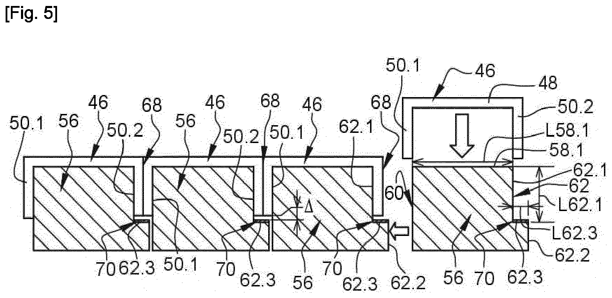

Selon une configuration visible sur la figure 5 par exemple, chaque outillage 56 comprend une première face 58.1 configurée pour recevoir la base 48 d'une préforme de fibres 46, une deuxième face 58.2 sensiblement parallèle à la première face 58.1 ainsi que des première et deuxième faces latérales 60, 62 reliant les première et deuxième faces 58.1, 58.2 configurées pour recevoir les ailes 50.1, 50.2 d'une préforme de fibres 46.

Selon un mode de réalisation, un procédé de fabrication dit IML (pour Inner Mould Line en anglais) comprend une étape de mise en place de chacune des préformes de fibres 46 sur un outillage 56 ainsi qu'une étape de positionnement des outillages 56 contre le support 54, juxtaposés les uns aux autres, la deuxième face 58.2 de chaque outillage 56 étant positionnée contre la surface d'appui F54 du support 54.

Suite à ces étapes, les bases 48 des différentes préformes de fibres 46 sont agencées approximativement parallèles à la surface d'appui F54 du support 54, écartées dudit support 54 par rapport aux ailes 50.1, 50.2 et forment la première partie 42.1 du panneau 42.

En suivant, le procédé de fabrication comprend une étape de pose de fibres sur les bases 48 des préformes de fibres 46 de manière à former la couche de fibres 52. Les fibres déposées lors de cette étape peuvent se présenter sous la forme de plis, de mèches et/ou de profilés. Selon une application, le support 54 comprend quatre surfaces d'appui F54 sur lesquelles sont positionnés les outillages 56, chacun pourvu d'une préforme de fibres 46. Cet ensemble forme un mandrin sur lequel sont enroulées des mèches de fibres de manière à former la couche de fibres 52. Les fibres peuvent être posées sur les bases 48 des préformes de fibres 46 en utilisant une technique de placement de fibres dite AFP (pour Automated Fiber Placement en anglais).

Le procédé de fabrication comprend également une étape de consolidation ou de polymérisation pour obtenir le panneau raidi 40 ainsi qu'une étape de démoulage visant à extraire le panneau raidi 40 du dispositif de fabrication.

Selon un mode de réalisation visible sur la figure 6, le dispositif de fabrication comprend un habillage de consolidation ou de polymérisation 64 configuré pour recouvrir la couche de fibres 52 lors de l'étape de consolidation ou de polymérisation ainsi qu'éventuellement au moins une contreplaque 66 intercalée entre la couche de fibres 52 et l'habillage de consolidation ou de polymérisation 64.

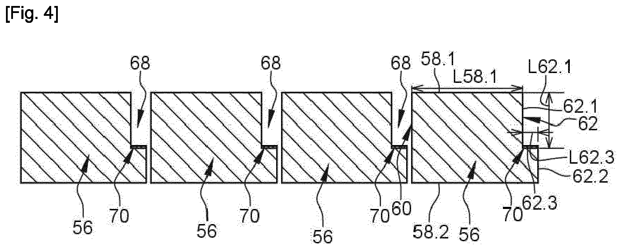

Selon un mode de réalisation, au moins l'une des faces latérales 60, 62 des outillages 56 comprend un premier pan 62.1 plat, adjacent et sensiblement perpendiculaire à la première face 58.1, un deuxième pan 62.2 plat, adjacent et sensiblement perpendiculaire à la deuxième face 58.2, ainsi qu'un décrochement 62.3 reliant les premier et deuxième pans 62.1, 62.2 et sensiblement parallèle à la première face 58.1. Chaque outillage présente une première largeur au niveau du premier pan 62.1 (dimension prise dans un plan transversal et parallèle à la première face 58.1) inférieure à une deuxième largeur au niveau du deuxième pan 62.2. Selon un mode de réalisation visible sur les figures 4 à 7, chaque outillage 56 comprend un seul décrochement 62.3 sur l'une des faces latérales 60, 62.

Selon un autre mode de réalisation non représenté, chaque premier outillage 56 comprend deux décrochements 62.3, un sur chacune de ses faces latérales 60, 62.

Ainsi, lorsque deux outillages 56 sont juxtaposés, les premiers pans 62.1 et les décrochements 62.3 des deux outillages 56 juxtaposés ou la face latérale 60 d'un premier outillage 56 ainsi que le premier pan 62.1 et le décrochement 62.3 d'un deuxième outillage 56 délimitent un logement 68 pour les ailes 50.1, 50.2 des deux préformes de fibres 46 positionnées sur les deux outillages 56 juxtaposés.

Quel que soit le mode de réalisation, les outillages 56 sont configurés pour que, lorsque deux outillages 56 sont juxtaposés, ils délimitent entre eux un logement 68, débouchant au niveau des premières faces 58.1, configuré pour loger les ailes 50.1, 50.2 des deux préformes de fibres 46 positionnées sur les deux outillages 56 juxtaposés.

Les outillages 56 peuvent avoir des dimensions légèrement différentes en fonction notamment des renforts 44 à réaliser. Selon une configuration visible sur les figures, ils présentent tous un décrochement 62.3 sur la même face latérale.

Lors de l'étape de consolidation ou de polymérisation, le support 54, les outillages 56, les préformes de fibres 46 ainsi que la couche de fibres 52 sont soumis à une variation de température. Ainsi, avant cette étape de consolidation ou de polymérisation, le support 54, les outillages 56, les préformes de fibres 46 ainsi que la couche de fibres 52 sont à une première température correspondant à la température ambiante, de l'ordre de 20°C. Lors de l'étape de consolidation ou de polymérisation, le support 54, les outillages 56, les préformes de fibres 46 ainsi que la couche de fibres 52 sont à une deuxième température, nettement supérieure à la première température, de l'ordre de 180°C. Cette deuxième température peut varier d'un procédé à l'autre en fonction notamment de la nature de la résine.

Malgré cette variation de température, les préformes de fibres 46 présentent des dimensions stables qui ne varient quasiment pas.

En parallèle, chaque outillage 56 est sensible aux variations de température et comprend des dimensions présentant des premières valeurs à la première température ainsi que des deuxièmes valeurs, supérieures aux premières valeurs, à la deuxième température.

Lorsqu'ils sont positionnés sur le support 54 à la première température, les outillages 56 sont espacés entre eux de manière à ce qu'ils soient en contact l'un contre l'autre à la deuxième température.

En complément, chaque outillage 56 recevant une préforme de fibres 46 présente à la première température une largeur L58.1, au niveau de la première face 58.1, inférieure à la distance séparant les ailes 50.1, 50.2 au niveau de la base 48 de la préforme de fibres 46 à la première température. La largeur L58.1 au niveau de la première face 58.1 de l'outillage 56 à la première température est déterminée de sorte que les ailes 50.1, 50.2 soient simultanément en contact avec l'outillage 56 à la deuxième température. Ainsi, chaque préforme de fibres 46 présente, à la température ambiante, au moins une sur-longueur L par rapport à l'outillage 56 qui la reçoit afin que les ailes 50.1, 50.2 de la préforme de fibres 46 soient en contact avec les première et deuxième faces 60, 62 de l'outillage 56 à la température de consolidation ou de polymérisation.

Selon une caractéristique de l'invention, les outillages 56 sont dimensionnés de manière à ce qu'après dilatation, chaque logement 68 présente une largeur L68 à la deuxième température sensiblement égale à l'épaisseur E44 des renforts 44. Ainsi, à la première température, chaque logement 68 présente une largeur L58 supérieure à l'épaisseur E44 des renforts.

Chaque outillage 56 présente une première dimension H62.1 prise dans un plan transversal, séparant la première face 58.1 et le décrochement 62.3 et correspondant à la hauteur du logement 68.

Cette première dimension H62.1 présente une première valeur à la première température et une deuxième valeur à la deuxième température de consolidation ou de polymérisation. Connaissant la première valeur et le coefficient de dilatation du matériau de l'outillage 56, il est possible de déterminer la deuxième valeur et inversement.

Chaque outillage 56 est dimensionné de manière à ce que la deuxième valeur de cette première dimension H62.1 soit supérieure à la hauteur H44 du renfort 44 à réaliser dans le logement 68 correspondant. Ainsi, les extrémités des ailes 50.1, 50.2 sont toujours distantes du décrochement 62.3, même à la deuxième température de consolidation ou de polymérisation.

Chaque outillage 56 présente une deuxième dimension L62.3, prise dans un plan transversal séparant les premier et deuxième pans 62.1, 62.2 et correspondant à la largeur du décrochement 62.3, qui a une troisième valeur à la première température et une quatrième valeur à la deuxième température de consolidation ou de polymérisation. Connaissant la troisième valeur et le coefficient de dilatation du matériau de l'outillage 56, il est possible de déterminer la quatrième valeur et inversement.

La troisième valeur de la deuxième dimension L62.3 est supérieure à l'épaisseur finale E44 du renfort 44 à réaliser dans le logement correspondant 68. Selon un agencement, cette deuxième dimension L62.3 est déterminée de manière à ce que sa quatrième valeur à la deuxième température de consolidation ou de polymérisation soit sensiblement égale à l'épaisseur finale E44 du renfort 44.

Ainsi, à la deuxième température de consolidation ou de polymérisation, les ailes 50.1, 50.2 ne sont pas comprimées entre les outillages 56, ce qui limite l'apparition de bourrelets.

Selon une caractéristique, pour chaque décrochement 62.3, l'outillage 56 présente un revêtement expansible 70 en fonction de la température. Ce revêtement expansible 70 est dimensionné de manière à entièrement recouvrir les chants d'extrémités des deux ailes 50.1, 50.2. Selon un autre aspect, le revêtement expansible 70 est configuré pour ne plus s'expanser lorsqu'il est en contact avec les ailes 50.1, 50.2 positionnées au droit du revêtement expansible 70 lors de l'étape de consolidation ou de polymérisation.

Ce revêtement expansible 70 est non réversible. Ainsi, le revêtement expansible 70 présente une épaisseur qui augmente lorsque la température augmente lorsqu'il n'est pas contraint et qui ne varie quasiment pas lorsque la température diminue.

Avantageusement, ce revêtement expansible 70 comprend une couche de colle repositionnable pour le relier à l'outillage 56 afin de pouvoir rester en place lors de la manipulation des préformes de fibres 46 et des outillages 56 et de se détacher facilement du décrochement 62.3 lors de l'étape de consolidation.

Selon un mode de réalisation, ce revêtement expansible 70 est découpé dans une bande adhésive avant d'être apposé contre le décrochement 62.3.

A titre d'exemple, le revêtement expansible 70 est un ruban adhésif commercialisé sous la marque « 3M » et la référence AF3014-50. Bien entendu, l'invention n'est pas limitée à ce type de matériau.

Ce revêtement expansible 70 présente une première épaisseur à la première température et une deuxième épaisseur à la deuxième température. La deuxième épaisseur est au moins deux fois supérieure à la première épaisseur.

Le revêtement expansible 70 et la première dimension H62.1 de l'outillage sont déterminés de manière à ce qu'à la deuxième température de consolidation ou de polymérisation, les ailes 50.1, 50.2 soient en contact avec le revêtement expansible 70.

La présence de ce revêtement expansible 70 permet de maîtriser la hauteur du renfort 44 positionné au droit dudit revêtement expansible 70 tout en empêchant la formation de bourrelets.

A l'issue de l'étape de consolidation ou de polymérisation, chaque revêtement expansible 70 reste fixé aux chants d'extrémité des ailes 50.1, 50.2. Ainsi, pour chaque renfort 44, le revêtement expansible 70 forme une protection du chant dudit renfort 44.

Selon un mode opératoire visible sur les figures 4 à 7, le procédé de fabrication comprend :
- une étape de préparation des outillages 56 en rapportant un revêtement expansible 70 au niveau de chaque décrochement 62.3, comme illustré sur la figure 4,
- une étape de mise en place des préformes de fibres 46 sur les outillages 56, comme illustré sur la figure 5, un espace Δ subsistant entre les ailes 50.1, 50.2 et chaque revêtement expansible 70,
- une étape de positionnement des outillages 56 pourvus des préformes de fibres 46 sur le support 54,
- une étape de pose d'une couche de fibres 52 sur les bases 48 des préformes de fibres 46,
- une étape de mise en place d'un habillage de consolidation ou de polymérisation 64 sur la couche de fibres 52, et éventuellement préalablement d'une contreplaque 66,
- une étape de consolidation ou de polymérisation,
- une étape de démoulage,
- une étape d'apposition de nouveaux revêtements expansibles non expansés sur

Lors de l'étape de consolidation ou de polymérisation visible sur la figure 6, les outillages 56 sont les uns contre les autres et le revêtement expansible 70 s'est expansé jusqu'à venir en contact avec les ailes 50.1, 50.2.

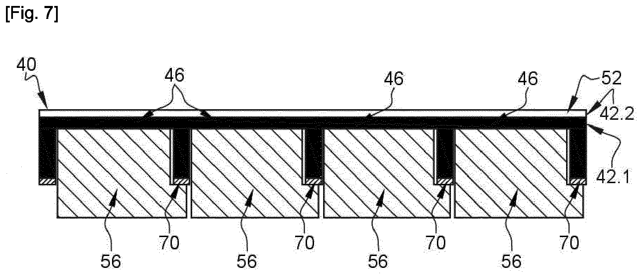

Comme illustré sur la figure 7, après refroidissement, les outillages 56 sont espacés et présentent une largeur L58.1 inférieure à la distance séparant les renforts 44. Les revêtements expansibles 70 restent en contact avec les renforts 44. Le panneau raidi 40 peut être séparé des outillages 56.

Ce dispositif de fabrication permet de parfaitement maîtriser la géométrie du panneau raidi en limitant l'apparition de bourrelets et en calibrant l'épaisseur E44 et la hauteur H44 des renforts 44.

## Revendications

1. Dispositif de fabrication d'un panneau raidi (40) comprenant un panneau (42) et des renforts (44) qui présentent chacun une épaisseur finale (E44) ainsi qu'une hauteur finale (H44), le dispositif de fabrication comprenant au moins un support (54) présentant une surface d'appui (F54) ainsi que des outillages (56) configurés pour supporter chacun une préforme de fibres (46) ayant une section transversale en U ou en C avec une base (48) et deux ailes (50.1, 50.2), chaque outillage (56) comportant une première face (58.1) configurée pour recevoir la base (48) d'une préforme de fibres (46), une deuxième face (58.2) configurée pour être positionnée contre la surface d'appui (F54) du support (54) ainsi que des première et deuxième faces latérales (60, 62) reliant les première et deuxième faces (58.1, 58.2) et configurées pour recevoir les ailes (50.1, 50.2) d'une préforme de fibres (46), au moins l'une des première et deuxième faces latérales (60, 62) comportant un décrochement (62) délimitant, lorsque deux outillages (56) sont juxtaposés, un logement (68) débouchant au niveau des premières faces (58.1) et configuré pour former un renfort (44) lors d'une étape de consolidation ou de polymérisation, chaque outillage (56) étant soumis en fonctionnement à une première température puis à une deuxième température de consolidation ou de polymérisation supérieure à la première température lors d'une étape de consolidation ou de polymérisation ; **caractérisé en ce que** les outillages (56) sont dimensionnés de manière à ce que chaque logement (68) présente une largeur (L68) à la deuxième température de consolidation ou de polymérisation sensiblement égale à l'épaisseur (E44) du renfort (44) à former dans ledit logement (68).

2. Dispositif de fabrication d'un panneau raidi (40) selon la revendication 1, **caractérisé en ce que** chaque outillage (56) comprend, au niveau de chaque décrochement (62.3), un revêtement expansible (70) en fonction de la température.

3. Dispositif de fabrication d'un panneau raidi (40) selon la revendication précédente, **caractérisé en ce que** chaque outillage (56) comprend une première dimension (H62.1) prise dans un plan transversal séparant la première face (58.1) et le décrochement (62.3), ladite première dimension (H62.1) présentant une première valeur à la première température et une deuxième valeur à la deuxième température de consolidation ou de polymérisation et **en ce que** le revêtement expansible (70) et la première dimension (H62.1) de l'outillage (56) sont déterminés de manière à ce que des ailes (50.1, 50.2) de préformes de fibres (46) positionnées au droit du décrochement (62.3) soient en contact avec le revêtement expansible (70) à la deuxième température de consolidation ou de polymérisation lors d'une étape de consolidation ou de polymérisation.

4. Dispositif de fabrication d'un panneau raidi (40) selon la revendication précédente, **caractérisé en ce que** le revêtement expansible (70) est configuré pour ne plus s'expanser lorsqu'il est en contact avec les ailes (50.1, 50.2) lors d'une étape de consolidation ou de polymérisation.

5. Dispositif de fabrication d'un panneau raidi (40) selon l'une des revendication 2 à 4, **caractérisé en ce que** le revêtement expansible (70) est non réversible.

6. Dispositif de fabrication d'un panneau raidi (40) selon la revendication précédente, **caractérisé en ce que** le revêtement expansible (70) comprend une couche de colle repositionnable pour le relier à l'outillage (56).

7. Dispositif de fabrication selon l'une des revendications précédentes, **caractérisé en ce que** chaque outillage (56) comprend, au niveau du décrochement (62.3), une deuxième dimension (L62.3) prise dans un plan transversal et correspondant à la largeur du décrochement (62.3), ladite deuxième dimension (L62.3) présentant une troisième valeur à la première température et une quatrième valeur à la deuxième température de consolidation ou de polymérisation et **en ce que** la troisième valeur de la deuxième dimension (L62.3) est supérieure à l'épaisseur finale (E44) du renfort (44) à former au droit dudit décrochement (62.3).

8. Dispositif de fabrication selon la revendication précédente, **caractérisé en ce que** la deuxième dimension (L62.3) est déterminée de manière à ce que la quatrième valeur soit sensiblement égale à l'épaisseur finale (E44) du renfort (44) à former au droit dudit décrochement (62.3).

9. Procédé de fabrication d'un panneau raidi (40) utilisant le dispositif de fabrication selon l'une des revendications 2 à 6, **caractérisé en ce que** le procédé de fabrication comprend :
- une étape de mise en place des préformes de fibres (46) sur des outillages (56) pourvus chacun d'un revêtement expansible (70) au niveau de chaque décrochement (62.3),
- une étape de positionnement des outillages (56) pourvus des préformes de fibres (46) sur le support (54),
- une étape de pose d'une couche de fibres (52) sur les bases (48) des préformes de fibres (46),
- une étape de mise en place d'un habillage de consolidation ou de polymérisation (64) sur la couche de fibres (52),
- une étape de consolidation ou de polymérisation,
- une étape de démoulage,
- une étape d'apposition de nouveaux revêtements expansibles (70) non expansés sur chacun des décrochements (62.3).
